# EUROPEAN PATENT SPECIFICATION

(11) **EP 3 330 581 B1**
(45) Date of publication and mention of the grant of the patent: **01.01.2020**
(21) Application number: 16830529.0
(22) Date of filing: 26.07.2016
(51) Int. Cl.: F16J 15/34, B29C 43/18, B29C 43/20, B32B 27/12, B32B 27/30, F16C 33/12, F16C 33/14, F16C 33/20, F16C 33/24, B29K 105/08, B29L 9/00, F16C 33/28, B32B 27/02, B32B 27/04, F16C 33/72

(54) **SLIDING MEMBER AND METHOD FOR PRODUCING A SLIDING MEMBER**
GLEITELEMENT UND HERSTELLUNGSVERFAHREN FÜR EIN GLEITELEMENT
ÉLÉMENT GLISSANT ET PROCÉDÉ DE FABRICATION D'ÉLÉMENT GLISSANT

(30) Priority: 28.07.2015 JP 2015148902
(43) Date of publication of application: 06.06.2018
(73) Proprietor: Eagle Industry Co., Ltd., Minato-ku Tokyo 105-8587 (JP)
(72) Inventor: MIYAZAWA Masami, Tokyo 105-8587 (JP); NAKAMURA Masaru, Tokyo 105-8587 (JP); SATO Kimiyasu, Tokyo 105-8587 (JP)
(74) Representative: TBK
(86) International application number: PCT/JP2016/071907
(87) International publication number: WO 2017/018424

(56) References cited:
- WO-A1-2013/101905
- JP-A- S6 263 220
- JP-A- S56 160 423
- JP-A- 2010 174 227
- JP-A- 2010 174 227
- JP-U- S61 179 415
- US-A- 4 111 499
- US-A1- 2015 093 066

## Description

### [Technical Field]

The present invention relates to a sliding member and a method for producing a sliding member, and more specifically relates to a sliding member having an intermediate layer between a surface layer and a base material, and a method for producing same.

### [Background Art]

Polytetrafluoroethylene (PTFE) obtained by blending carbon materials, graphite, glass fibers, carbon fibers, ceramic powders and the like, as aggregates, is used for sliding materials in mechanical seals used under unlubricated conditions. Sliding materials that contain PTFE as a primary component have the advantages of being chemically stable and hardly being affected by atmosphere, and have been put to many practical uses as stirrers, powder transportation equipment, a variety of rotating instruments, and the like used in food and medicine production processes and semiconductor production processes. However, there have been reports of sliding materials undergoing thermal deformation in cases in which the atmosphere temperature is high, in cases in which sliding materials come into contact with high temperature gases or mists and in cases in which temperatures increase due to heat generated during sliding. As a result, sliding materials obtained by blending self-lubricating substances, such as carbon, in metals or ceramics such as silicon carbide, have come to be used in this type of mechanical seal.

Meanwhile, because ceramics such as silicon carbide are extremely hard and suffer from problems such as scoring and squealing caused by poor lubrication, use of such ceramics is restricted. As a result, providing a coating layer on a seal surface when using a sliding material as a sliding member has been proposed (see PTL 1).

In addition, a sliding member having, on a slide surface, a fiber slide member obtained by dispersing a solid lubricant and a thermosetting resin between gaps in a fibrous structure formed from organic fibers has been proposed, and it has been reported that this sliding member can reduce wear and friction of the sliding material (see PTL 2). Another relevant prior art is disclosed in PTL 3.

### [Citation List]

### [Patent Literature]

[PTL 1] Japanese Utility Model Application Publication No. H04-058674
[PTL 2] Japanese Patent Application Publication No. 2015-010689
[PTL 3] US 4 111 499

### [Summary of Invention]

### [Technical Problem]

As mentioned above, a resin coating layer or fiber slide member is provided on a slide surface of a sliding member such as a mechanical seal in some cases, but this type of layer may become peeled from a base material as a result of use under harsh conditions or long term use.

The purpose of the present invention is to provide a sliding member in which a layer (a surface layer) formed on a sliding surface hardly peels off.

### [Solution to Problem]

As a result of diligent research into how to solve this problem, the inventors of the present invention found that by providing a special intermediate layer containing a fiber sheet between a surface layer and a base material, the surface layer hardly peels off, and thereby completed the present invention.

That is, the present invention provides the following embodiments:
<1> A sliding member, comprising:
   a base material; and
   a surface layer which is provided on the base material, contains a fluororesin and has a sliding surface,
   the sliding member further comprising, between the surface layer and the base material, an intermediate layer containing a fiber sheet, wherein
   the intermediate layer contains a fluororesin in gaps between fibers of the fiber sheet on the surface layer side, and contains a thermoplastic resin other than a fluororesin in gaps between fibers of the fiber sheet on the base material side.
<2> The sliding member according to <1>, wherein the fluororesin contained in the surface layer is at least one type of resin selected from the group consisting of polytetrafluoroethylene (PTFE), tetrafluoroethylene-perfluoroalkyl vinyl ether copolymers (PFA) and tetrafluoroethylene-hexafluoropropylene copolymers (FEP).
<3> The sliding member according to <1> or <2>, wherein the surface layer is a layer that contains a fiber sheet.
<4> The sliding member according to any one of <1> to <3>, wherein the fluororesin contained in the intermediate layer is at least one type of resin selected from the group consisting of polytetrafluoroethylene (PTFE), tetrafluoroethylene-perfluoroalkyl vinyl ether copolymers (PFA), tetrafluoroethylene-hexafluoropropylene copolymers (FEP), poly(vinylidene difluoride) (PVDF), tetrafluoroethylene-ethylene copolymers (ETFE) and polychlorotrifluoroethylene (PCTFE).
<5> The sliding member according to any one of <1> to <4>, wherein the thermoplastic resin other than a fluororesin contained in the intermediate layer is at least one type of resin selected from the group consisting of polyether ether ketones (PEEK), poly(phenylene sulfides) (PPS), polyether sulfones (PES), polyimides (PI), polyamideimides (PAI), polysulfones (PSF), polyarylates (PAR) and polyetherimides (PEI) .
<6> The sliding member according to any one of <1> to <5>, wherein the fiber sheet contained in the intermediate layer is a sheet constituted from at least one type selected from the group consisting of aramid resins, fluororesins, polyamide resins, polyester resins, acrylic resins, poly(vinyl alcohol) resins, polyolefin resins, polyurethane resins, cellulose resins and carbon fibers.
<7> The sliding member according to any one of <1> to <6>, wherein the base material is a base material constituted from at least one type of material selected from the group consisting of carbon, ceramics and metals.
<8> A mechanical seal, comprising the sliding member according to any one of <1> to <7>.
<9> A method for producing a sliding member having, on a sliding surface thereof, a surface layer that contains a fluororesin, the method comprising:
   a preparation step of preparing a member for a surface layer, which contains a fluororesin, a member for an intermediate layer, which contains a fiber sheet, and a base material; and
   a thermo-compression bonding step of thermo-compression bonding the member for the surface layer to one surface of the member for the intermediate layer, and thermo-compression bonding the other surface of the member for the intermediate layer to the base material.
<10> The method for producing a sliding member according to <9>, wherein
   the member for the intermediate layer is a member obtained by impregnating the fiber sheet with a thermoplastic resin other than a fluororesin, and
   in the thermo-compression bonding step, the fluororesin contained in the member for the surface layer permeates into the fiber sheet contained in the member for the intermediate layer.
<11> The method for producing a sliding member according to <9>, wherein
   the member for the intermediate layer is a member obtained by impregnating the fiber sheet with a fluororesin, and the base material is a base material having a surface coated with a thermoplastic resin other than a fluororesin, and
   in the thermo-compression bonding step, the thermoplastic resin other than a fluororesin coated on the base material permeates into the fiber sheet contained in the member for the intermediate layer.
<12> The method for producing a sliding member according to <9>, wherein
   the base material is a base material having a surface coated with a thermoplastic resin other than a fluororesin, and
   in the thermo-compression bonding step, the fluororesin contained in the member for the surface layer and the thermoplastic resin other than a fluororesin coated on the base material permeate into the fiber sheet contained in the member for the intermediate layer.
<13> The method for producing a sliding member according to <9>, wherein
   the member for the intermediate layer is a member obtained by impregnating one surface of the fiber sheet with a fluororesin and by impregnating the other surface of the fiber sheet with a thermoplastic resin other than a fluororesin, and
   in the thermo-compression bonding step, the member for the surface layer is thermo-compression bonded to the surface of the member for the intermediate layer impregnated with the fluororesin, and the base material is thermo-compression bonded to the surface of the member for the intermediate layer impregnated with the thermoplastic resin other than a fluororesin.

### [Effects of Invention]

According to the present invention, it is possible to provide a sliding member in which a surface layer formed on a sliding surface hardly peels off.

### [Brief Description of Drawings]

[Fig. 1]

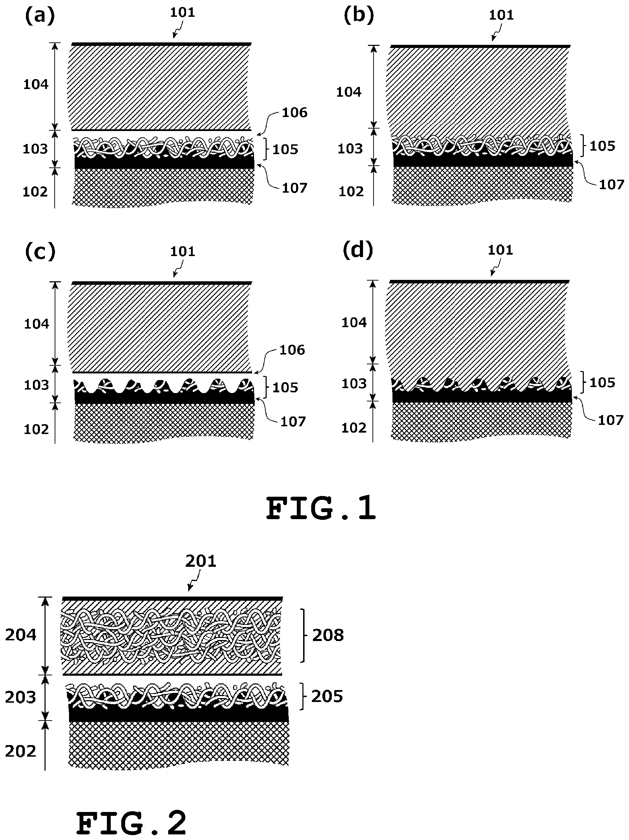

   Fig. 1 is a schematic diagram that shows a cross section in the vicinity of a sliding surface of a sliding member that is one aspect of the present invention (one embodiment).
[Fig. 2]
   Fig. 2 is a schematic diagram that shows a cross section in the vicinity of a sliding surface of a sliding member that is one aspect of the present invention (one embodiment).
[Fig. 3]

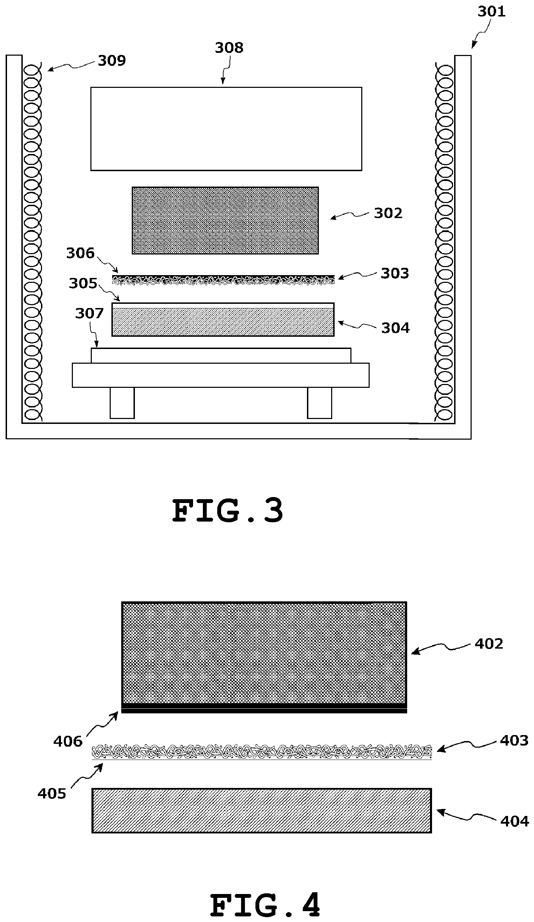

   Fig. 3 is a schematic diagram that illustrates a thermo-compression bonding step in a method for producing a sliding member that is one aspect of the present invention (one embodiment).
[Fig. 4]
   Fig. 4 is a schematic diagram that illustrates a thermo-compression bonding step in a method for producing a sliding member that is one aspect of the present invention (one embodiment).
[Fig. 5]

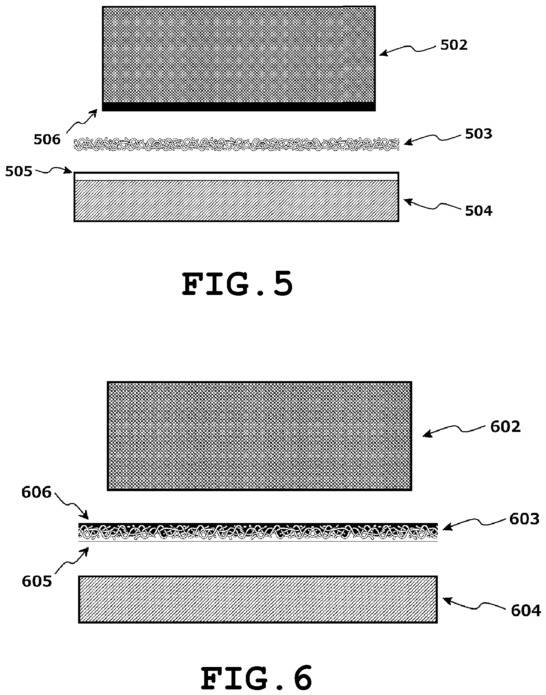

   Fig. 5 is a schematic diagram that illustrates a thermo-compression bonding step in a method for producing a sliding member that is one aspect of the present invention (one embodiment).
[Fig. 6]
   Fig. 6 is a schematic diagram that illustrates a thermo-compression bonding step in a method for producing a sliding member that is one aspect of the present invention (one embodiment).
[Fig. 7]

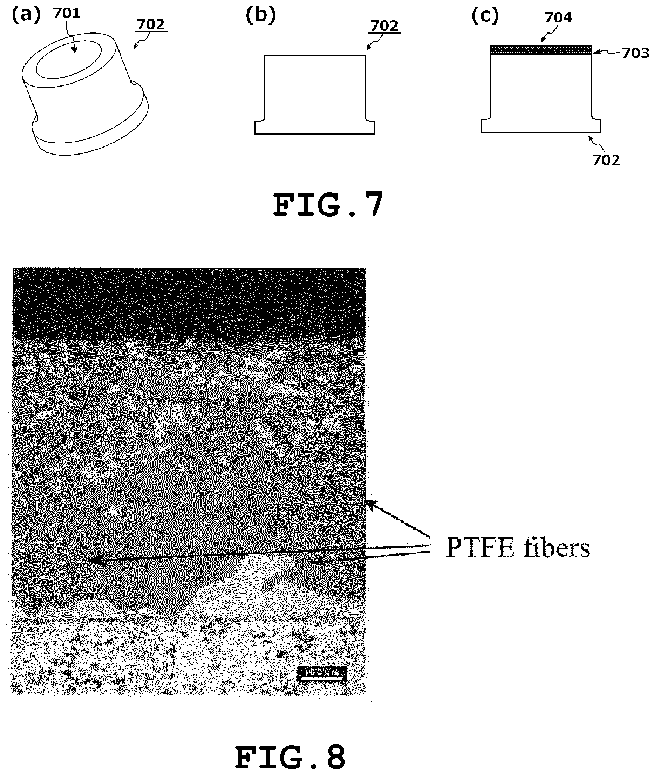

   Fig. 7 is a schematic diagram that shows the shape of a base material and sliding member used in the working examples ((a) is a perspective view of the base material, (b) is a frontal view of the base material, and (c) is a frontal view of the sliding member).
[Fig. 8]
   Fig. 8 is an optical microscope photograph of a cross section of the sliding member of Working Example 10 after abrading/polishing (a photograph in lieu of a diagram).
[Fig. 9]

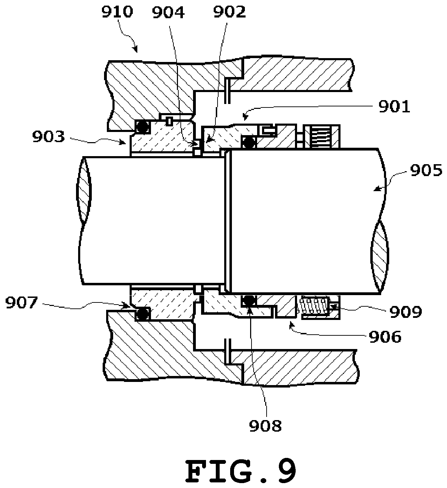

   Fig. 9 is a cross-sectional schematic diagram of a mechanical seal used in sliding tests in the working examples.

### [Description of Embodiments]

### <Sliding member>

A sliding member that is one aspect of the present invention (hereinafter sometimes abbreviated to "the sliding member of the present invention") is a sliding member having a base material and a surface layer which is provided on the base material, contains a fluororesin and has a sliding surface. In addition, the sliding member of the present invention is characterized in that the sliding member further has, between the surface layer and the base material, an intermediate layer containing a fiber sheet, and that the intermediate layer contains a fluororesin in gaps between fibers of the fiber sheet on the surface layer side, and contains a thermoplastic resin other than a fluororesin in gaps between fibers of the fiber sheet on the base material side.

As mentioned above, a resin coating layer or fiber slide member is provided on a slide surface of a sliding member such as a mechanical seal in some cases, but this type of layer may become peeled from a base material as a result of use under harsh conditions or long term use. The inventors of the present invention found that by providing a special intermediate layer such as that described above between the surface layer and the base material, the surface layer hardly peels off.

Fig. 1(a) is a schematic diagram that shows a cross section in the vicinity of a sliding surface of the sliding member of the present invention (one embodiment). A sliding member 101 has a structure obtained by laminating an intermediate layer 103 and a surface layer 104 on a surface of a base material 102, the inner part of the intermediate layer 103 includes a fiber sheet 105, a fluororesin 106 is contained in gaps between fibers of the fiber sheet 105 on the surface layer side, and a thermoplastic resin 107 other than a fluororesin is contained in gaps between fibers of the fiber sheet 105 on the base material side. The fluororesin 106, which exhibits high adhesion to the surface layer 104, and the thermoplastic resin 107 other than a fluororesin, which exhibits high adhesion to the base material 102, each penetrate into pores and uneven parts in the fiber sheet 105, thereby exhibiting a so-called "anchor effect", improving adhesive strength between the surface layer 104 and the intermediate layer 103 and between the intermediate layer 103 and the base material 102, and making the surface layer hardly peel off.

Moreover, in some cases, the surface layer is made of only a resin that is the same type as the fluororesin contained in the intermediate layer, and in some cases, there is no clear boundary between the surface layer 104 and the intermediate layer 103, as shown in Fig. 1(b), but even in such embodiments, because a fluororesin is contained in gaps between fibers of the fiber sheet 105 on the surface layer side, such embodiments can be said to fall within the scope of the present invention.

In addition, an embodiment in which the fiber sheet 105 is melted and integrated with the surface layer 104 or fluororesin 106, as shown in Fig. 1(c) or 1(d), falls within the scope of the present invention.

Here, the "fiber sheet" in the present invention means a material obtained by bundling a plurality of fibers and processing these fibers into the form of a sheet.

Detailed explanations will now be given of the "surface layer", "intermediate layer" and "base material".

### (Surface layer)

The sliding member of the present invention has, on a sliding surface thereof, a surface layer that contains a fluororesin (hereinafter sometimes abbreviated to "the fluororesin of the surface layer"), but the type and content of the fluororesin of the surface layer, components other than fluororesin and the thickness of the surface layer are not particularly limited, with publicly known technical details able to be used as appropriate. Explanations will now be given through the use of specific examples.

The fluororesin of the surface layer is not particularly limited as long as this resin is a polymeric compound that contains fluorine atoms, and examples thereof include polytetrafluoroethylene (PTFE), tetrafluoroethylene-perfluoroalkyl vinyl ether copolymers (PFA), tetrafluoroethylene-hexafluoropropylene copolymers (FEP), poly(vinylidene difluoride) (PVDF), tetrafluoroethylene-ethylene copolymers (ETFE) and polychlorotrifluoroethylene (PCTFE). Of these, polytetrafluoroethylene (PTFE), tetrafluoroethylene-perfluoroalkyl vinyl ether copolymers (PFA) and tetrafluoroethylene-hexafluoropropylene copolymers (FEP) are preferred, and polytetrafluoroethylene (PTFE) and tetrafluoroethylene-perfluoroalkyl vinyl ether copolymers (PFA) are particularly preferred. By using this type of fluororesin, wear and friction can be easily reduced. Moreover, the fluororesin in the surface layer is not limited to a single type, and a combination of two or more types thereof may be used.

The content of the fluororesin (or the total content of 2 or more fluororesins) in the surface layer is generally 30 mass% or more, preferably 40 mass% or more, and more preferably 50 mass% or more, and is generally 100 mass% or less, preferably 95 mass% or less, and more preferably 90 mass% or less. If this content falls within the range mentioned above, wear and friction can be easily reduced.

It is preferable for the surface layer to be a layer that contains a fiber sheet (hereinafter sometimes abbreviated to "the fiber sheet of the surface layer"). Fig. 2 is a schematic diagram that shows a cross section in the vicinity of a sliding surface of the sliding member of the present invention (one embodiment), but contains a fiber sheet 208 in not only an intermediate layer 203, but also in a surface layer 204. If this type of fiber sheet is contained in the surface layer, wear and friction can be easily reduced.

The fiber sheet of the surface layer means a material obtained by bundling a plurality of fibers and processing these fibers into the form of a sheet, and the material, thickness, and the like, thereof are not particularly limited, with publicly known technical details able to be used as appropriate. Explanations will now be given through the use of specific examples.

Examples of the material of the fiber sheet of the surface layer include materials having higher melting points than the fluororesin used in the intermediate layer, such as fibers of resins such as aramid and PTFE, carbon fibers (including precursor carbon fibers prior to carbon fiber formation), glass fibers and metal fibers. Of these, resin fibers are preferred, aramid and PTFE fibers are specifically preferred, and PTFE fibers are particularly preferred. If a material such as those mentioned above is used, wear and friction can be easily reduced. Moreover, the fiber sheet of the surface layer is not limited to being constituted from a single material, and may be constituted from 2 or more materials.

The thickness of the fiber sheet of the surface layer (the thickness prior to containing a fluororesin or the like) is generally 0.3 mm or more, preferably 0.5 mm or more, and more preferably 0.8 mm or more, and is generally 2.0 mm or less, preferably 1.5 mm or less, and more preferably 1.2 mm or less. If this thickness falls within the range mentioned above, wear and friction can be easily reduced. This may be the thickness of a plurality of overlaid sheets.

The maximum pore diameter in the fiber sheet of the surface layer (the maximum pore diameter prior to containing a fluororesin or the like) is preferably a size at which the fiber sheet can be easily impregnated with particles of a fluororesin or the like, but is generally 0.005 mm or more, preferably 0.010 mm or more, and more preferably 0.05 mm or more, and is generally 0.5 mm or less, preferably 0.3 mm or less, and more preferably 0.2 mm or less. If this maximum pore diameter falls within the range mentioned above, wear and friction can be easily reduced.

The porosity of the fiber sheet of the surface layer (the porosity prior to containing a fluororesin or the like) is preferably a ratio at which the fiber sheet can be adequately impregnated with particles of a fluororesin or the like, but is generally 50% or more, preferably 60% or more, and more preferably 70% or more, and is generally 98% or less, preferably 97% or less, and more preferably 95% or less. If this porosity falls within the range mentioned above, wear and friction can be easily reduced.

The thickness of the surface layer is generally 0.3 mm or more, preferably 0.5 mm or more, and more preferably 0.8 mm or more, and is generally 2.0 mm or less, preferably 1.5 mm or less, and more preferably 1.2 mm or less. If this thickness falls within the range mentioned above, wear and friction can be easily reduced.

### (Intermediate layer)

The sliding member of the present invention is characterized in that the sliding member further has, between the surface layer and the base material, an intermediate layer that contains a fiber sheet (hereinafter sometimes abbreviated to "the fiber sheet of the intermediate layer"), and that the intermediate layer contains a fluororesin (hereinafter sometimes abbreviated to "the fluororesin of the intermediate layer") in the surface layer-side surface of the fiber sheet and the gaps between fibers of the fiber sheet (preferably, in the surface layer-side), and contains a thermoplastic resin other than a fluororesin (a resin material having higher adhesion to the base material than the fluororesin) in the base material-side surface of the fiber sheet and the gaps between the fibers of the fiber sheet (preferably, in the base material-side), but the material and thickness of the fiber sheet, the type and content of the fluororesin and the type and content of the thermoplastic resin other than a fluororesin are not particularly limited, with publicly known technical details able to be used as appropriate. Explanations will now be given through the use of specific examples.

Examples of the material of the fiber sheet of the intermediate layer include fibers of resins such as polytetrafluoroethylene, carbon fibers, glass fibers and metal fibers. Of these, resin fibers are preferred, fluororesins, polyamide resins and aramid resins are more preferred, and fluororesins such as polytetrafluoroethylene (PTFE) are particularly preferred.

In addition, the melting point of the fiber sheet of the intermediate layer is generally 200°C or more, preferably 260°C or more, and more preferably 320°C or more, and is generally 500°C or less, preferably 400°C or less, and more preferably 390°C or less, and the characteristic of hardly flowing out when molten is essential.

If the material of the intermediate layer is a material such as those mentioned above, an anchor effect can be adequately exhibited and the surface layer is even less likely to detach. Moreover, the fiber sheet of the intermediate layer is not limited to being constituted from a single material, and may be constituted from 2 or more materials.

The thickness of the fiber sheet of the intermediate layer (the thickness prior to containing a fluororesin or the like) is generally 0.1 mm or more, preferably 0.15 mm or more, and more preferably 0.2 mm or more, and is generally 1.2 mm or less, preferably 1.0 mm or less, and more preferably 0.5 mm or less. If this thickness falls within the range mentioned above, an anchor effect can be adequately exhibited and the surface layer can even more hardly peel off.

The maximum pore diameter in the fiber sheet of the intermediate layer (the maximum pore diameter prior to containing a fluororesin or the like) is preferably a size at which the fiber sheet can be easily impregnated with particles of a fluororesin or the like, but is generally 0.005 mm or more, preferably 0.010 mm or more, and more preferably 0.05 mm or more, and is generally 0.5 mm or less, preferably 0.3 mm or less, and more preferably 0.2 mm or less. If this maximum pore diameter falls within the range mentioned above, an anchor effect can be adequately exhibited and the surface layer is even less likely to detach.

The porosity of the fiber sheet of the surface layer (the porosity prior to containing a fluororesin or the like) is generally 50% or more, preferably 60% or more, and more preferably 70% or more, and is preferably a ratio at which the fiber sheet can be adequately impregnated with particles of a fluororesin or the like, but is generally 98% or less, preferably 97% or less, and more preferably 95% or less. If this porosity falls within the range mentioned above, an anchor effect can be adequately exhibited and the surface layer is even less likely to detach.

The fluororesin of the intermediate layer is not particularly limited as long as this is a polymeric compound containing fluorine atoms, as in the surface layer, but is preferably a resin having similar properties to the fluororesin of the surface layer. Specific examples include polytetrafluoroethylene (PTFE), tetrafluoroethylene-perfluoroalkyl vinyl ether copolymers (PFA), tetrafluoroethylene-hexafluoropropylene copolymers (FEP), poly(vinylidene difluoride) (PVDF), tetrafluoroethylene-ethylene copolymers (ETFE) and polychlorotrifluoroethylene (PCTFE). Of these, polytetrafluoroethylene (PTFE), tetrafluoroethylene-perfluoroalkyl vinyl ether copolymers (PFA) and tetrafluoroethylene-hexafluoropropylene copolymers (FEP) are preferred, and polytetrafluoroethylene (PTFE) and tetrafluoroethylene-perfluoroalkyl vinyl ether copolymers (PFA) are particularly preferred.

In addition, the melting point of the fluororesin of the intermediate layer is generally 200°C or more, preferably 260°C or more, and more preferably 320°C or more, and is generally 500°C or less, preferably 400°C or less, and more preferably 390°C or less.

If a fluororesin such as those mentioned above is used, an anchor effect can be adequately exhibited and the surface layer is even less likely to detach. Moreover, the fluororesin in the intermediate layer is not limited to a single type, and a combination of two or more types thereof may be used.

The thermoplastic resin other than a fluororesin is not particularly limited as long as this is a thermoplastic resin other than a fluororesin, but examples thereof include olefin resins, styrene resins, acrylic resins, polyester resins and polycarbonate resins. Of these, super engineering plastics are preferred, and polyether ether ketones (PEEK), poly(phenylene sulfides) (PPS), polyether sulfones (PES), polyamideimides (PAI), polysulfones (PSF), polyarylates (PAR) and polyetherimides (PEI), and the like, are particularly preferred.

In addition, the melting point of the thermoplastic resin other than a fluororesin is generally 200°C or more, preferably 260°C or more, and more preferably 320°C or more, and is generally 500°C or less, preferably 400°C or less, and more preferably 390°C or less.

If a thermoplastic resin other than a fluororesin such as those mentioned above is used, an anchor effect can be adequately exhibited and the surface layer is even less likely to detach.

Preferred combinations of the fluororesin and the thermoplastic resin other than a fluororesin include a combination of polytetrafluoroethylene (PTFE) and a polyether ether ketone (PEEK) and a combination of a tetrafluoroethylene-perfluoroalkyl vinyl ether copolymer (PFA) and a polyether ether ketone (PEEK). If a combination such as that mentioned above is used, an anchor effect can be adequately exhibited and the surface layer is even less likely to detach.

The ratio (in terms of volume) of the fluororesin and the thermoplastic resin other than a fluororesin contained in the intermediate layer is generally 10:90 to 90:10, preferably 30:70 to 70:30, and more preferably 60:40 to 40:60. If this ratio falls within the range mentioned above, the surface layer is even less likely to detach.

### (Base Material)

The material of the base material of the sliding member of the present invention is not particularly limited, with publicly known technical details able to be used as appropriate, but examples thereof include carbon, silicon carbide, tungsten carbide, ceramics and metals. Moreover, the base material is not limited to being constituted from a single material, and may be constituted from 2 or more materials.

### <Mechanical seal>

Intended uses of the sliding member of the present invention are not particularly limited, with examples thereof including mechanical seals and seal members for rotating devices such as bearings, but use as a mechanical seal is particularly preferred. Moreover, a mechanical seal provided with the sliding member of the present invention is one aspect of the present invention (hereinafter sometimes abbreviated to "the mechanical seal of the present invention").

Intended uses of the mechanical seal of the present invention are not particularly limited, but use in devices used under dry lubrication conditions, such as multifunctional filtration dryers, vacuum dryers, rotary feeders and rotary joints is preferred.

### <Method for producing sliding member>

It is particularly preferable to produce the sliding member of the present invention by preparing a member for a surface layer, which contains a fluororesin, a member for an intermediate layer, which contains a fiber sheet, and a base material, and then thermo-compression bonding the member for the surface layer to one surface of the member for the intermediate layer and thermo-compression bonding the other surface of the member for the intermediate layer to the base material. If a production method such as that mentioned above is used, a sliding member in which the surface layer hardly peels off can be produced with good efficiency.

Moreover, one aspect of the present invention (hereinafter sometimes abbreviated to "the production method of the present invention") is a method for producing a sliding member, which is characterized by including a preparation step of preparing a member for a surface layer, which contains a fluororesin, a member for an intermediate layer, which contains a fiber sheet, and a base material (hereinafter sometimes abbreviated to "the preparation step"), and a thermo-compression bonding step of thermo-compression bonding the member for the surface layer to one surface of the member for the intermediate layer, and thermo-compression bonding the other surface of the member for the intermediate layer to the base material (hereinafter sometimes abbreviated to "the thermo-compression bonding step").

Here, "one surface" means one surface of the fiber sheet or member for the intermediate layer, and "other surface" means the opposite surface of the sheet or member.

A detailed explanation will now be given of a preferred embodiment of the production method of the present invention.

Fig. 3 is a schematic diagram that illustrates a thermo-compression bonding step in the production method of the present invention (one embodiment). A member 304 for the surface layer, a member 303 for the intermediate layer, a base material 302 and a weight 308 are overlaid in that order in an electric furnace 301, and pressure for thermo-compression bonding is applied by the weight 308.

The prepared member 304 for the surface layer contains a fluorine-containing resin (in the embodiment shown in Fig. 3, a fluorine-containing resin 305 is coated on the member for the intermediate layer-side surface of the member 304 for the surface layer), thermo-compression bonding is carried out by heating to a temperature that is not lower than the melting point of the fluororesin so that the fluororesin melts and penetrates into the fiber sheet of the member 303 for the intermediate layer, and the formed intermediate layer contains the fluorine-containing resin in the surface layer-side surface and the gaps between fibers of the fiber sheet. Meanwhile, the prepared member 303 for the intermediate layer is impregnated with a thermoplastic resin 306 other than a fluororesin, and the formed intermediate layer contains the thermoplastic resin other than a fluororesin in the base material-side surface and the gaps between fibers of the fiber sheet.

Fig. 4 is also a schematic diagram that illustrates a thermo-compression bonding step in the production method of the present invention (another embodiment).

A thermoplastic resin 406 other than a fluororesin is coated on the member for the intermediate layer-side surface of a prepared base material 402, thermo-compression bonding is carried out by heating to a temperature that is not lower than the melting point of the thermoplastic resin other than a fluororesin so that the thermoplastic resin other than a fluororesin melts and penetrates into a fiber sheet of a member 403 for the intermediate layer, and the formed intermediate layer contains the thermoplastic resin other than a fluorine-containing resin in the base material-side surface and the gaps between fibers of the fiber sheet. Meanwhile, the prepared member 403 for the intermediate layer is impregnated with a fluororesin 405, and the formed intermediate layer contains the fluororesin in the surface layer-side surface and the gaps between fibers of the fiber sheet.

Fig. 5 is also a schematic diagram that illustrates a thermo-compression bonding step in the production method of the present invention (another embodiment).

A prepared member 504 for the surface layer contains a fluorine-containing resin (in the embodiment shown in Fig. 5, a fluorine-containing resin 505 is coated on the member for the intermediate layer-side surface of the member 504 for the surface layer), thermo-compression bonding is carried out by heating to a temperature that is not lower than the melting point of the fluororesin so that the fluororesin melts and penetrates into the fiber sheet of the member 503 for the intermediate layer, and the formed intermediate layer contains the fluorine-containing resin in the surface layer-side surface and the gaps between fibers of the fiber sheet. Meanwhile, a thermoplastic resin 506 other than a fluorine-containing resin is coated on the member for the intermediate layer-side surface of a prepared base material 502, thermo-compression bonding is carried out by heating to a temperature that is not lower than the melting point of the thermoplastic resin other than a fluororesin so that the thermoplastic resin other than a fluororesin melts and penetrates into the fiber sheet of the member 503 for the intermediate layer, and the formed intermediate layer contains the thermoplastic resin other than a fluorine-containing resin in the base material-side surface and the gaps between fibers of the fiber sheet.

Fig. 6 is also a schematic diagram that illustrates a thermo-compression bonding step in the production method of the present invention (another embodiment).

One surface (the member for the surface layer-side surface) of a fiber sheet of a prepared member 603 for the intermediate layer is impregnated with a fluororesin 605, the other surface (the base material-side surface) of the fiber sheet is impregnated with a thermoplastic resin 606 other than a fluororesin, and the formed intermediate layer contains the fluororesin in the surface layer-side surface and the gaps between fibers of the fiber sheet and contains the thermoplastic resin other than a fluororesin in the base material-side surface and the gaps between fibers of the fiber sheet.

Detailed explanations will now be given for specific conditions in the "preparation step" and "thermo-compression bonding step".

### (Preparation step)

The preparation step is a step in which a member for a surface layer, which contains a fluororesin, a member for an intermediate layer, which contains a fiber sheet, and a base material are prepared, but the method and conditions for preparing the member for the surface layer or the like are not particularly limited, and the member for the surface layer or the like may be procured or prepared.

A method for preparing the member for the surface layer will now be explained by giving an example of a method for preparing a member for a surface layer in which the surface layer is a layer that contains a fiber sheet.

In the case of this type of member for the surface layer, one example is a method in which a fiber sheet is immersed in a dispersion liquid of a fluororesin or coated with a dispersion liquid of a fluororesin, and then dewatered and dried. Moreover, the immersion or coating is not limited to being carried out once, and it is preferable to repeat a cycle involving dewatering, drying and then immersing or coating again in order to adequately impregnate gaps between fibers of the fiber sheet with the fluororesin.

The number of times to carry out the immersion or coating is generally 1 or more, preferably 2 or more, and more preferably 3 or more, and is generally 5 or less. This number varies according to the porosity of the fibers being used, the concentration of the impregnation solution, and the like.

The average particle diameter of the fluororesin in the fluororesin dispersion liquid is preferably a size at which the fiber sheet can be easily impregnated with particles of the fluororesin, but is generally 0.0001 mm or more, and more preferably 0.0002 mm or more, and is generally 0.002 mm or less, preferably 0.001 mm or less, and more preferably 0.0005 mm or less. However, there is no problem if particles aggregate and form particles having diameters greater than this.

The solid content concentration in the fluororesin dispersion liquid is generally 30 mass% or more, preferably 40 mass% or more, and more preferably 50 mass% or more, and is generally 80 mass% or less, preferably 70 mass% or less, and more preferably 60 mass% or less.

A method for preparing the member for the intermediate layer will now be explained by giving an example of a method for preparing a member for an intermediate layer in which one surface of a fiber sheet is impregnated with a fluororesin and the other surface of the fiber sheet is impregnated with a thermoplastic resin other than a fluorine-containing resin.

In the case of this type of member for the intermediate layer, one example is a method in which a fluororesin dispersion liquid is coated on one surface of a fiber sheet, dewatered and then dried, and a dispersion liquid of a thermoplastic resin other than a fluororesin is coated on the other surface of the fiber sheet, dewatered and then dried. Moreover, the coating is not limited to being carried out once, and it is preferable to repeat a cycle involving dewatering, drying and then coating again in order to adequately impregnate gaps between the fibers of the fiber sheet with the thermoplastic resin other than a fluororesin.

The number of times to carry out the coating is generally 1 or more, preferably 2 or more, and more preferably 3 or more, and is generally 5 or less.

The average particle diameter of the thermoplastic resin other than a fluororesin in the dispersion liquid of the thermoplastic resin other than a fluororesin is preferably a size at which the fiber sheet can be easily impregnated with particles of the thermoplastic resin other than the fluororesin, but is generally 0.0003 mm or more, preferably 0.0005 mm or more, and more preferably 0.001 mm or more, and is generally 0.050 mm or less, preferably 0.030 mm or less, and more preferably 0.020 mm or less.

The solid content concentration in the dispersion liquid of the thermoplastic resin other than a fluororesin is generally 20 mass% or more, preferably 30 mass% or more, and more preferably 50 mass% or more, and is generally 80 mass% or less, preferably 70 mass% or less, and more preferably 60 mass% or less.

### (Thermo-compression bonding step)

The thermo-compression bonding step is a step of thermo-compression bonding the member for the surface layer to one surface of the member for the intermediate layer, and thermo-compression bonding the other surface of the member for the intermediate layer to the base material, but is not particularly limited in terms of heating temperature, applied pressure, compression bonding duration, and the like, with publicly known technical details able to be used as appropriate. Explanations will now be given through the use of specific examples. Moreover, compression bonding of the member for the surface layer to one surface of the member for the intermediate layer and compression bonding of the other surface of the member for the intermediate layer to the base material may be carried out either separately or simultaneously.

The heating temperature in the thermo-compression bonding step is selected as appropriate within the range of 200°C to 450°C depending on the melting point of the fluororesin or thermoplastic resin other than a fluororesin, and by selecting a temperature within this range, adhesive strength can be easily ensured.

The pressure applied in the thermo-compression bonding step is a pressure at which the members are not damaged, and by applying pressure in the thermo-compression bonding, adhesive strength can be easily ensured.

The compression bonding duration in the thermo-compression bonding step varies according to the materials being used, and adhesive strength can be easily ensured as this duration increases.

The production method of the present invention may further include other steps as long as the preparation step and thermo-compression bonding step mentioned above are included.

For example, examples of other steps include a compaction step in which a fluororesin or the like is introduced into voids, a cutting step in which the sliding member is cut to a target shape, and a polishing step in which a sliding surface is polished.

### Examples

The present invention will now be explained through the use of working examples, but is not limited to these working examples. The invention is defined by the appended claims.

### <Working Example 1>

### (Preparation of member for surface layer)

A 100% PTFE fiber sheet having a thickness of 0.35 mm (maximum pore diameter: 100 µm, porosity: 90%) was immersed in a mixed liquid of an aqueous dispersion liquid of polytetrafluoroethylene (PTFE) (solid content: 60 mass%) and an aqueous dispersion liquid of a polyether ether ketone (PEEK) (solid content: 60 mass%) (in the mixed liquid, the compositional ratio of PTFE and PEEK (volume of solid content) was 50 vol.% : 50 vol.%), and the fiber sheet was then squeezed so as to remove creases, spread on a water-absorbing paper so as to remove excess moisture, and then heated in an electric furnace. A member for a surface layer was prepared by repeating this procedure a plurality of times.

### (Preparation of member for intermediate layer)

One surface of a 100% polytetrafluoroethylene (PTFE) fiber sheet having a thickness of 0.35 mm (maximum pore diameter: 100 µm, porosity: 90%) was coated with an aqueous dispersion liquid (solid content: approximately 50 mass%) of a tetrafluoroethylene-perfluoroalkyl vinyl ether copolymer (PFA), and the fiber sheet was then heated in an electric furnace. A member for an intermediate layer was prepared by then coating the other surface of the fiber sheet with an aqueous dispersion liquid of a polyether ether ketone (PEEK) and heating in an electric furnace in the same way. Moreover, the compositional ratio of the PFA and PEEK in the member for the intermediate layer was measured using an optical microscope and found to be 50 vol.% : 50 vol.%.

### (Preparation of base material)

A cylindrical silicon carbide base material (internal diameter 56 mm × external diameter 81 mm × height 27 mm), such as that shown in Figs. 7(a) and 7(b), was prepared, and the surface of the base material to be bonded to the member for the intermediate layer was roughened (to a roughness Rz of approximately 0.1 µm) using a diamond slurry.

### (Thermo-compression bonding of member for surface layer to member for intermediate layer and thermo-compression bonding of member for intermediate layer to base material)

The member for the surface layer was placed on a carbon sheet disposed in an electric furnace, and the surface coated with the aqueous dispersion liquid of a PFA was placed thereon so as to be in contact with the member for the surface layer. The base material was then placed thereon and heated while applying pressure to the bonding surface so as to bond the member for the surface layer, the member for the intermediate layer and the base material.

### (Compaction treatment-finishing)

The thermo-compression bonded members were immersed in an aqueous dispersion liquid of polytetrafluoroethylene (PTFE) (primary particle diameter: 0.2 µm, solid content: 40 mass%) and then transferred to a decompressible container so as to allow impregnation under vacuum conditions. After opening the container to the atmosphere, the bonded members were transferred in the immersed state to a pressurizable container, after which impregnation was continued under pressurized conditions. Excess moisture and adhered matter were then removed, and the bonded members were heated in an electric furnace, and the impregnation and heating procedure was repeated twice.

The obtained members were transferred to an electric furnace and heated in a state whereby pressure was applied to the bonding surface.

A sliding member was then obtained by cutting off those parts of the member for the surface layer and the member for the intermediate layer that protruded from the inside and outside of the cylinder, finishing to a cylindrical shape, and smoothing the surface layer by polishing.

### <Working Example 2>

A sliding member was obtained using a similar method to that used in Working Example 1, except that the compositional ratio (volume of solid content) of the PTFE and PEEK in the mixed liquid in which the PTFE fiber sheet of the member for the surface layer was immersed was changed to 80 vol.% : 20 vol.%.

### <Working Example 3>

A sliding member was obtained using a similar method to that used in Working Example 1, except that the PTFE fiber sheet of the member for the surface layer was changed to one having a thickness of 0.9 mm, a maximum pore diameter of 15 µm and a porosity of 70%, and the mixed liquid in which the PTFE fiber sheet was immersed was changed to a PTFE aqueous dispersion liquid (solid content: 60 mass%).

### <Working Example 4>

A sliding member was obtained using a similar method to that used in Working Example 3, except that the base material was changed to carbon.

### <Working Example 5>

A sliding member was obtained using a similar method to that used in Working Example 3, except that the base material was changed to SUS304.

### <Working Example 6>

A sliding member was obtained using a similar method to that used in Working Example 1, except that the fiber sheet of the member for the surface layer was changed to a 100% aramid fiber sheet having a thickness of 0.6 mm (maximum pore diameter: 200 µm, porosity: 95%). Moreover, the compositional ratio of PTFE and PEEK in the member for the surface layer was 50 vol.% : 50 vol.%, as in Working Example 1.

### <Working Example 7>

A sliding member was obtained using a similar method to that used in Working Example 6, except that the compositional ratio (volume of solid content) of the PTFE and PEEK in the mixed liquid in which the PTFE fiber sheet of the member for the surface layer was immersed was changed to 80 vol.% : 20 vol.%.

### <Working Example 8>

A sliding member was obtained using a similar method to that used in Working Example 6, except that the mixed liquid in which the fiber sheet of the member for the surface layer was immersed was changed to a PTFE aqueous dispersion liquid (solid content: 60 mass%).

### <Working Example 9>

A sliding member was obtained using a similar method to that used in Working Example 8, except that the aqueous dispersion liquid coated on the fiber sheet of the member for the intermediate layer was changed to an aqueous dispersion liquid of PTFE and an aqueous dispersion liquid of PEEK, and the compositional ratio of PTFE and PEEK was 50 vol.% : 50 vol.%.

### <Working Example 10>

A sliding member was obtained using a similar method to that used in Working Example 6, except that the base material was changed to carbon.

Fig. 8 shows an optical microscope photograph of a cross section of the obtained sliding member. In the upper part of Fig. 8 excluding the black portion, the gray portion is the sliding surface side and the bottom of the figure is the base material side, the white spot-like portions on the sliding surface side are the fiber sheet, and the white curved portions below the center of the figure are resin on the base material side.

In addition, the white spot-like portions present near the center of the figure are the fiber sheet in the intermediate layer.

### <Comparative Example 1>

A sliding member was obtained using a similar method to that used in Working Example 1, except that the member for the surface layer and the base material were directly thermo-compression bonded to each other without using the member for the intermediate layer.

### <Comparative Example 2>

A sliding member was obtained using a similar method to that used in Comparative Example 1, except that fiber sheet of the member for the surface layer was changed to a 100% aramid fiber sheet having a thickness of 0.6 mm (maximum pore diameter: 200 µm, porosity: 95%).

### <Comparative Example 3>

A sliding member was obtained using a similar method to that used in Comparative Example 1, except that the member for the surface layer was replaced with a PTFE sheet containing 10 wt.% of carbon fibers in order to compare wear resistance.

### (Water vapor exposure test)

Water (pure water) was spread on the bottom of a heatable simple pressure-resistant container (a steam sterilizer), each sliding member of Working Examples 1 to 10 and Comparative Examples 1 to 3 was placed on the water surface from above and subjected to 5 cycles involving heating for 2 hours at a liquid temperature of 120°C and a pressure of 0.1 MPa and cooling for 6 hours, after which detachment (floating) of the surface layer or the like was evaluated. The results are shown in Tables 1 to 3.

### (Sliding test)

Each sliding member of Working Examples 1 to 3 and 6 to 8 and Comparative Example 3 was disposed as a sealing ring for rotation in a mechanical seal such as that shown in Fig. 9 and subjected to a sliding test, and the temperature close to the sliding surface during sliding (a thermocouple was disposed at a position approximately 1 mm from the sliding surface) and the amount of wear (the thickness) per 100 hours were measured (the sliding test conditions were as follows). Results for the temperature close to the sliding surface and the amount of wear are shown in Tables 1 to 3.
- Number of rotations: 300 (approximately 1.0 m/s)
- Atmosphere and pressure in mechanical seal part: Nitrogen atmosphere, 0.5 MPa
- Test duration: 100 hours
- Pushing pressure: 0.15 MPa

Moreover, because only the base material or the resin used in the intermediate layer was altered in Working Examples 4, 5, 9 and 10, only the water vapor exposure test was carried out and adhesive properties were evaluated.

Moreover, details of the mechanical seal shown in Fig. 9 are as follows.

This mechanical seal is formed of a fixing sealing ring 903, which is held by an O-ring 907 at the inner periphery of a housing 910 that surrounds the outer periphery of a rotating shaft 905 and which is clamped to the housing by an engaging means; a rotating sealing ring 901, which is disposed at the outer periphery of the rotating shaft 905 via an O-ring 908 so as to be freely movable in the axial direction and which faces the fixing sealing ring 903 in the axial direction; a plurality of springs 909, which push the rotating sealing ring 901 onto the fixing sealing ring 903 and apply a load between sliding surfaces 902 and 904; an intermediate ring 906, which is disposed between the plurality of springs 909 and the rotating sealing ring 901; and a collar, which supports the plurality of springs 909 and transmits turning force of the rotating shaft 905 to the fixing sealing ring via the intermediate ring 906, and has the function of sealing a region to be sealed as a result of the sliding surfaces 902 and 904 seal-sliding.

### [Table 1]

**Table 1**

| | | | | Example 1 | Example 2 | Example 3 | Example 4 | Example 5 |
|---|---|---|---|---|---|---|---|---|
| Surface layer | Fiber sheet | Material | | PTFE | ← | ← | ← | ← |
| | | Thickness [mm] | | 0.35 | ← | 0.9 | ← | ← |
| | | Max. pore diameter [*µ*m] | | 100 | ← | 15 | ← | ← |
| | | Porosity [%] | | 90 | ← | 70 | ← | ← |
| | Impregnated resin | PTFE [vol. %] | | 50 | 80 | 100 | ← | ← |
| | | PEEK [vol. %] | | 50 | 20 | 0 | ← | ← |
| Intermediate layer | Resin | Material 1 | | PFA | ← | ← | ← | ← |
| | | Material 2 | | PEEK | ← | ← | ← | ← |
| | | Proportion [vol. %] | Matetial1 | 50 | ← | ← | ← | ← |
| | | | Matetial2 | 50 | ← | ← | ← | ← |
| | Fiber sheet | Material | | PTFE | ← | ← | ← | ← |
| | | Thickness [mm] | | 0.35 | ← | ← | ← | ← |
| | | Max. pore diameter [*µ*m] | | 100 | ← | ← | ← | ← |
| | | Porosity [%] | | 90 | ← | ← | ← | ← |
| Material of base material | | | | SiC | ← | ← | Carbon | SUS304 |
| Water vapor exposure test | Peeling or rising ? (Y/N) | | | N | N | N | N | N |
| Sliding test | Amount of wear [*µ*m] | | | 1 | 2.3 | 20 | - | - |
| | Temperature close to sliding surface[°C] | | | 86 | 72 | 65 | - | - |

### [Table 2]

**Table 2**

| | | | | Example 6 | Example7 | Example8 | Example9 | Example10 |
|---|---|---|---|---|---|---|---|---|
| Surface layer | Fiber sheet | Material | | Aramid | ← | ← | ← | ← |
| | | Thickness [mm] | | 0.6 | ← | ← | ← | ← |
| | | Max. pore diameter [*µ*m] | | 200 | ← | ← | ← | ← |
| | | Porosity [%] | | 95 | ← | ← | ← | ← |
| | Impregnated resin | PTFE [vol. %] | | 50 | 80 | 100 | ← | 50 |
| | | PEEK [vol. %] | | 50 | 20 | 0 | ← | 50 |
| Intermediate layer | Resin | Matetial 1 | | PFA | ← | ← | PTFE | PFA |
| | | Matetial 2 | | PEEK | ← | ← | PEEK | PEEK |
| | | Proportion [vol. %] | Matetial 1 | 50 | ← | ← | ← | ← |
| | | | Matetial 2 | 50 | ← | ← | ← | ← |
| | Fiber sheet | Material | | PTFE | ← | ← | ← | ← |
| | | Thickness [mm] | | 0.35 | ← | ← | ← | ← |
| | | Max. pore diameter [*µ*m] | | 100 | ← | ← | ← | ← |
| | | Porosity [%] | | 90 | ← | ← | ← | ← |
| Material of base material | | | | SiC | ← | ← | ← | Carbon |
| Water vapor exposure test | Peeling or rising ? (Y/N) | | | N | N | N | N | N |
| Sliding test | Amount of wear [*µ*m] | | | 0.5 | 1.8 | 5 | - | - |
| | Temperature close to sliding surface [°C] | | | 95 | 80 | 75 | - | - |

### [Table 3]

**Table 3**

| | | | | Comparative Example 1 | Comparative Example 2 | Comparative Example 3 |
|---|---|---|---|---|---|---|
| Surface layer | Fiber sheet | Material | | PTFE | Aramid | PTFE (with 10 wt.% of CF10) |
| | | Thickness [mm] | | 0.35 | 0.6 | - |
| | | Max. pore diameter [*µ*m] | | 100 | 200 | - |
| | | Porosity [%] | | 90 | 95 | - |
| | Impregnated resin | PTFE [vol. %] | | 50 | 50 | - |
| | | PEEK [vol. %] | | 50 | 50 | - |
| Intermediate layer | Resin | Matetial 1 | | - | - | - |
| | | Matetial 2 | | - | - | - |
| | | Proportion [vol. %] | Matetial 1 | - | - | - |
| | | | Matetial 2 | - | - | - |
| | Fiber sheet | Material | | - | - | - |
| | | Thickness [mm] | | - | - | - |
| | | Max. pore diameter [*µ*m] | | - | - | - |
| | | Porosity [%] | | - | - | - |
| Material of base material | | | | SiC | ← | - |
| Water vapor exposure test | Peeling or rising ? (Y/N) | | | Y (localized) | Y (localized) | - |
| Sliding test | Amount of wear [*µ*m] | | | - | - | 30 |
| | Temperature close to sliding surface [°C] | | | - | - | 120 |

### [Industrial Applicability]

The sliding member of the present invention can be used as a seal member or the like for a rotating device, such as a mechanical seal, a segment seal or a lip seal.

### [Reference Signs List]

101, 201 Sliding member
102, 202 Base material
103, 203 Intermediate layer
104, 204 Surface layer
105, 205 Fiber sheet
106 Fluororesin
107 Thermoplastic resin other than fluororesin
208 Fiber sheet
301 Electric furnace
302, 402, 502, 602 Base material
303, 403, 503, 603 Member for intermediate layer
304, 404, 504, 604 Member for surface layer
305, 405, 505, 605 Fluorine-based resin
306, 406, 506, 606 Thermoplastic resin other than fluorine-based resin
307 Heat treated sheet
308 Load
309 Heater
701 Cavity
702 Base material
703 Intermediate layer
704 Surface layer
901 Rotating sealing ring (sliding member)
902 Sliding surface of rotating sealing ring
903 Fixing sealing ring (sliding member)
904 Sliding surface of fixing sealing ring
905 Rotating shaft
906 Intermediate ring
907 O-ring
908 O-ring
909 Plurality of springs
910 Housing

## Claims

1. A sliding member (101, 201), comprising:
a base material (102, 202, 302, 402, 502, 602, 702); and
a surface layer (104, 204, 704) which is provided on the base material (102, 202, 302, 402, 502, 602, 702), contains a fluororesin (106) and has a sliding surface,
the sliding member (101, 201) further comprising, between the surface layer (104, 204, 704) and the base material (102, 202, 302, 402, 502, 602, 702), an intermediate layer (103, 203, 703) containing a fiber sheet (105, 205, 208), **characterised in that**
the intermediate layer (103, 203, 703) contains a fluororesin (106, 305, 405, 505, 605) in gaps between fibers of the fiber sheet (105, 205, 208) on the surface layer side, and contains a thermoplastic resin other than a fluororesin (306, 406, 506, 606) in gaps between fibers of the fiber sheet (105, 205) on the base material side.

2. The sliding member (101, 201) according to claim 1, wherein the fluororesin (106, 305, 405, 505, 605) contained in the surface layer (104, 204, 704) is at least one type of resin selected from the group consisting of polytetrafluoroethylene (PTFE), tetrafluoroethylene-perfluoroalkyl vinyl ether copolymers (PFA) and tetrafluoroethylene-hexafluoropropylene copolymers (FEP).

3. The sliding member (101, 201) according to claim 1 or 2, wherein the surface layer (104, 204, 704) is a layer that contains a fiber sheet (105, 205).

4. The sliding member (101, 201) according to any one of claims 1 to 3, wherein the fluororesin (106, 305, 405, 505, 605) contained in the intermediate layer (103, 203, 703) is at least one type of resin selected from the group consisting of polytetrafluoroethylene (PTFE), tetrafluoroethylene-perfluoroalkyl vinyl ether copolymers (PFA), tetrafluoroethylene-hexafluoropropylene copolymers (FEP), poly(vinylidene difluoride) (PVDF), tetrafluoroethylene-ethylene copolymers (ETFE) and polychlorotrifluoroethylene (PCTFE).

5. The sliding member (101, 201) according to any one of claims 1 to 4, wherein the thermoplastic resin other than a fluororesin (306, 406, 506, 606) contained in the intermediate layer (103, 203, 703) is at least one type of resin selected from the group consisting of polyether ether ketones (PEEK), poly(phenylene sulfides) (PPS), polyether sulfones (PES), polyimides (PI), polyamideimides (PAI), polysulfones (PSF), polyarylates (PAR) and polyetherimides (PEI).

6. The sliding member (101, 201) according to any one of claims 1 to 5, wherein the fiber sheet (105, 205, 208) contained in the intermediate layer (103, 203, 703) is a sheet constituted from at least one type selected from the group consisting of aramid resins, fluororesins, polyamide resins, polyester resins, acrylic resins, poly(vinyl alcohol) resins, polyolefin resins, polyurethane resins, cellulose resins and carbon fibers.

7. The sliding member (101, 201) according to any one of claims 1 to 6, wherein the base material (102, 202, 302, 402, 502, 602, 702) is a base material constituted from at least one type of material selected from the group consisting of carbon, ceramics and metals.

8. A mechanical seal, comprising the sliding member (101, 201) according to any one of claims 1 to 7.

9. A method for producing a sliding member (101, 201) comprising:
a preparation step of preparing a member for a surface layer, which contains a fluororesin, a member for an intermediate layer, which contains a fiber sheet, and a base material; and
a thermo-compression bonding step of thermo-compression bonding the member for the surface layer to one surface of the member for the intermediate layer, and thermo-compression bonding the other surface of the member for the intermediate layer to the base material,
**characterised in that** the member for the intermediate layer is a member obtained by impregnating the fiber sheet (105, 205, 208) with a thermoplastic resin other than a fluororesin (306, 406, 506, 606), and
in the thermo-compression bonding step, the fluororesin (106, 305, 405, 505, 605) contained in the member for the surface layer permeates into the fiber sheet (105, 205, 208) contained in the member for the intermediate layer,
or wherein
the member for the intermediate layer is a member obtained by impregnating the fiber sheet (105, 205, 208) with a fluororesin (106, 305, 405, 505, 605), and the base material (102, 202, 302, 402, 502, 602, 702) is a base material having a surface coated with a thermoplastic resin other than a fluororesin (306, 406, 506, 606), and
in the thermo-compression bonding step, the thermoplastic resin other than a fluororesin (306, 406, 506, 606) coated on the base material (102, 202, 302, 402, 502, 602, 702) permeates into the fiber sheet (105, 205, 208) contained in the member for the intermediate layer,
or wherein
the base material (102, 202, 302, 402, 502, 602, 702) is a base material having a surface coated with a thermoplastic resin other than a fluororesin (306, 406, 506, 606), and
in the thermo-compression bonding step, the fluororesin (106, 305, 405, 505, 605) contained in the member for the surface layer and the thermoplastic resin other than a fluororesin (306, 406, 506, 606) coated on the base material (102, 202, 302, 402, 502, 602, 702) permeate into the fiber sheet (105, 205, 208) contained in the member for the intermediate layer,
or wherein
the member for the intermediate layer is a member obtained by impregnating one surface of the fiber sheet (105 ,205, 208) with a fluororesin (106, 305, 405, 505, 605) and by impregnating the other surface of the fiber sheet (105, 205, 208) with a thermoplastic resin other than a fluororesin (306, 406, 506, 606), and
in the thermo-compression bonding step, the member for the surface layer is thermo-compression bonded to the surface of the member for the intermediate layer impregnated with the fluororesin (106, 305, 405, 505, 605), and the base material (102, 202, 302, 402, 502, 602, 702) is thermo-compression bonded to the surface of the member for the intermediate layer impregnated with the thermoplastic resin other than a fluororesin (306, 406, 506, 606).

## Patentansprüche

1. Gleitelement (101, 201), umfassend:
ein Basismaterial (102, 202, 302, 402, 502, 602, 702); und
eine Oberflächenschicht (104, 204, 704), welche auf dem Basismaterial (102, 202, 302, 402, 502, 602, 702) bereitgestellt ist, enthält ein Fluorharz (106) und weist eine Gleitoberfläche auf,
das Gleitelement (101, 201) ferner umfassend, zwischen der Oberflächenschicht (104, 204, 704) und dem Basismaterial (102, 202, 302, 402, 502, 602, 702), eine ein Faserblatt (105, 205, 208) enthaltende Zwischenschicht (103, 203, 703), **dadurch gekennzeichnet, dass**
die Zwischenschicht (103, 203, 703) ein Fluorharz (106, 305, 405, 505, 605) in Lücken zwischen den Fasern des Faserblatts (105, 205, 208) der Oberflächenschichtseite enthält und ein thermoplastisches Harz anders als ein Fluorharz (306, 406, 506, 606) in Lücken zwischen den Fasern des Faserblatts (105, 205) an der Basismaterialseite enthält.

2. Gleitelement (101, 201) nach Anspruch 1, wobei das in der Oberflächenschicht (104, 204, 704) enthaltene Fluorharz (106, 305, 405, 505, 605) zumindest eine Art von Harz ausgewählt aus der Gruppe bestehend aus Polytetrafluoroethylen (PTFE), Tetrafluoroethylenperfluoroalkylvinylethercopolymeren (PFA) und Tetrafluoroethylenhexafluoropropylencopolymeren (FEP) ist.

3. Gleitelement (101, 201) nach Anspruch 1 oder 2, wobei die Oberflächenschicht (104, 204, 704) eine Schicht ist, die ein Faserblatt (105, 205) enthält.

4. Gleitelement (101, 201) nach einem der Ansprüche 1 bis 3, wobei das in der Zwischenschicht (103, 203, 703) enthaltene Fluorharz (106, 305, 405, 505, 605) zumindest eine Art von Harz ausgewählt aus der Gruppe bestehend aus Polytetrafluoroethylen (PTFE), Tetrafluoroethylenperfluoroalkylvinylethercopolymeren (PFA), Tetrafluoroethylenhexafluoropropylencopolymeren (FEP), Poly(vinylidendifluorid) (PVDF), Tetrafluoroethylenethylencopolymeren (ETFE) und Polychlorotrifluoroethylen (PCTFE) ist.

5. Gleitelement (101, 201) nach einem der Ansprüche 1 bis 4, wobei das thermoplastische Harz anders als ein in der Zwischenschicht (103, 203, 703) enthaltenes Fluorharz (306, 406, 506, 606) zumindest eine Art von Harz ausgewählt aus der Gruppe bestehend aus Polyetherketonen (PEEK), Poly(phenylensulfiden) (PPS), Polyethersulfonen (PES), Polyimiden (PI), Polyamidimiden (PAI), Polysulfon (PSF), Polyarylaten (PAR) und Polyetherimiden (PEI) ist.

6. Gleitelement (101, 201) nach einem der Ansprüche 1 bis 5, wobei das in der Zwischenschicht (103, 203, 703) enthaltene Faserblatt (105, 205, 208) ein Blatt beschaffen aus zumindest einer Art ausgewählt aus der Gruppe bestehend aus Aramidharzen, Fluorharzen, Polyamidharzen, Polyesterharzen, Acrylharzen, Poly(vinylalkohol)harzen, Polyolefinharzen, Polyurethanharzen, Celluloseharzen und Kohlenstofffasern ist.

7. Gleitelement (101, 201) nach einem der Ansprüche 1 bis 6, wobei das Basismaterial (102, 202, 302, 402, 502, 602, 702) ein Basismaterial beschaffen aus von zumindest einer Art von Material ausgewählt aus der Gruppe bestehend aus Kohlenstoff, Keramiken und Metallen ist.

8. Gleitringdichtung, umfassend das Gleitelement (101, 201) nach einem der Ansprüche 1 bis 7.

9. Verfahren zum Herstellen eines Gleitelements (101, 201) umfassend:
einen Vorbereitungsschritt des Vorbereitens eines Elements für eine Oberflächenschicht, welches ein Fluorharz enthält, ein Element für eine Zwischenschicht, welche ein Faserblatt enthält, und ein Basismaterial; und
einen Thermokompressions-Bondschritt des Thermokompressionsbondens des Elements für die Oberflächenschicht an einer Oberfläche des Elements für die Zwischenschicht, und Thermokompressionsbonden der anderen Oberfläche des Elements für die Zwischenschicht an das Basismaterial, **dadurch gekennzeichnet, dass**:
das Element für die Zwischenschicht ein durch Imprägnieren des Faserblatts (105, 205, 208) mit einem thermoplastischen Harz anders als ein Fluorharz (306, 406, 506, 606) erhaltenes Element ist, und
in dem Thermokompressions-Bondschritt, das dem in Element für die Oberflächenschicht enthalten Fluorharz (106, 305, 405, 505, 605) in das in dem Element für die Zwischenschicht enthaltene Faserblatt (105, 205, 208) dringt,
oder wobei
das Element für die Zwischenschicht ein Element erhalten durch Imprägnieren des Faserblatts (105, 205, 208) mit einem Fluorharz (106, 305, 405, 505, 605) ist und das Basismaterial (102, 202, 302, 402, 502,602, 702) ein Basismaterial aufweisend eine Oberfläche beschichtet mit einem thermoplastischen Harz anders als ein Fluorharz (306, 406, 506, 606) ist, und
in dem Thermokompressions-Bondschritt, das auf dem Basismaterial (102, 202, 302, 402, 502, 602, 702) beschichtet thermoplastische Harz anders als ein Fluorharz (306, 406, 506, 606) in das in dem Element für die Zwischenschicht enthalte Faserblatt (105, 205, 208) eindringt,
oder wobei
das Basismaterial (102, 202, 302, 402, 502, 602, 702) ein Basismaterial aufweisend eine Oberfläche beschichtet mit einem thermoplastischen Harz anders als ein Fluorharz (306, 406, 506, 606) ist, und
in dem Thermokompressions-Bondschritt, das Fluorharz (106, 305, 405, 505, 605) enthalten in dem Element für die Oberflächenschicht und das thermoplastische Harz anders als ein Fluorharz (306, 406, 506, 606) beschichtet auf dem Basismaterial (102, 202, 302, 402, 502, 602, 702) in das in dem Element für die Zwischenschicht enthaltene Faserblatt (105, 205, 208) eindringen,
oder wobei
das Element für die Zwischenschicht ein Element erhalten durch Imprägnieren einer Oberfläche des Faserblatts (105, 205, 208) mit einem Fluorharz (106, 305, 405, 505, 605) und durch Imprägnieren der anderen Oberfläche des Faserblatts (104, 205, 208) mit einem thermoplastischen Harz anders als ein Fluorharz (306, 406, 506, 606) ist, und
in dem Thermokompressions-Bondschritt, das Element für die Oberflächenschicht thermokompressionsgebondet an die Oberfläche des Elements für die Zwischenschicht imprägniert mit dem Fluorharz (106, 305, 405, 505, 605) ist und das Basismaterial (102, 202, 302, 402, 502, 602, 702) thermo-kompressionsgebondet an die Oberfläche des Elements für die Zwischenschicht imprägniert mit dem thermoplastischen Harz anders als ein Fluorharz (306, 406, 506, 606) ist.

## Revendications

1. Elément coulissant (101, 201) comprenant :
un matériau de base (102, 202, 302, 402, 502, 602, 702) ; et
une couche de surface (104, 204, 704) qui est disposée sur le matériau de base (102, 202, 302, 402, 502, 602, 702), qui contient une résine fluorée (106) et qui a une surface de glissement,
l'élément coulissant (101, 201) comprenant en outre, entre la couche de surface (104, 204, 704) et le matériau de base (102, 202, 302, 402, 502, 602, 702), une couche intermédiaire (103, 203, 703) contenant une feuille de fibres (105, 205, 208), **caractérisé en ce que**
la couche intermédiaire (103, 203, 703) contient une résine fluorée (106, 305, 405, 505, 605) dans des espaces entre des fibres de la feuille de fibres (105, 205, 208) sur le côté couche de surface, et contient une résine thermoplastique autre qu'une résine fluorée (306, 406, 506, 606) dans des espaces entre des fibres de la feuille de fibres (105, 205) sur le côté matériau de base.

2. Elément coulissant (101, 201) selon la revendication 1, dans lequel la résine fluorée (106, 305, 405, 505, 605) contenue dans la couche de surface (104, 204, 704) est au moins un type de résine choisi dans le groupe constitué par le polytétrafluoroéthylène (PTFE), les copolymères de tétrafluoroéthylène-perfluoroalkylvinyléther (PFA) et les copolymères de tétrafluoroéthylène-hexafluoropropylène (FEP).

3. Elément coulissant (101, 201) selon la revendication 1 ou 2, dans lequel la couche de surface (104, 204, 704) est une couche qui contient une feuille de fibres (105, 205).

4. Elément coulissant (101, 201) selon l'une quelconque des revendications 1 à 3, dans lequel la résine fluorée (106, 305, 405, 505, 605) contenue dans la couche intermédiaire (103, 203, 703) est au moins un type de résine choisi dans le groupe constitué par le polytétrafluoroéthylène (PTFE), les copolymères de tétrafluoroéthylène-perfluoroalkylvinyléther (PFA), les copolymères de tétrafluoroéthylène-hexafluoropropylène (FEP), le poly(difluorure de vinylidène) (PVDF), les copolymères de tétrafluoroéthylène-éthylène (ETFE) et le polychlorotrifluoroéthylène (PCTFE).

5. Elément coulissant (101, 201) selon l'une quelconque des revendications 1 à 4, dans lequel la résine thermoplastique autre qu'une résine fluorée (306, 406, 506, 606) contenue dans la couche intermédiaire (103, 203, 703) est au moins un type de résine choisi dans le groupe constitué par les polyéther-éthercétones (PEEK), les poly(sulfures de phénylène) (PPS), les polyéthersulfones (PES), les polyimides (PI), les polyamide-imides (PAI), les polysulfones (PSF), les polyarylates (PAR) et les polyétherimides (PEI).

6. Elément coulissant (101, 201) selon l'une quelconque des revendications 1 à 5, dans lequel la feuille de fibres (105, 205, 208) contenue dans la couche intermédiaire (103, 203, 703) est une feuille constituée d'au moins un type choisi dans le groupe constitué par les résines d'aramide, les résines fluorées, les résines de polyamide, les résines de polyester, les résines acryliques, les résines de poly(alcool vinylique), les résines de polyoléfine, les résines de polyuréthane, les résines de cellulose et les fibres de carbone.

7. Elément coulissant (101, 201) selon l'une quelconque des revendications 1 à 6, dans lequel le matériau de base (102, 202, 302, 402, 502, 602, 702) est un matériau de base constitué d'au moins un type de matériau choisi dans le groupe constitué par le carbone, les céramiques et les métaux.

8. Joint mécanique comprenant l'élément coulissant (101, 201) de l'une quelconque des revendications 1 à 7.

9. Procédé pour produire un élément coulissant (101, 201) comprenant :
une étape de préparation consistant à préparer un élément pour une couche de surface, qui contient une résine fluorée, un élément pour une couche intermédiaire, qui contient une feuille de fibres, et un matériau de base ; et
une étape de collage par thermocompression consistant à coller par thermocompression l'élément pour la couche de surface sur une surface de l'élément pour la couche intermédiaire, et à coller par thermocompression l'autre surface de l'élément pour la couche intermédiaire sur le matériau de base,
**caractérisé en ce que**
l'élément pour la couche intermédiaire est un élément obtenu par imprégnation de la feuille de fibres (105, 205, 208) avec une résine thermoplastique autre qu'une résine fluorée (306, 406, 506, 606), et
dans l'étape de collage par thermocompression, la résine fluorée (106, 305, 405, 505, 605) contenue dans l'élément pour la couche de surface passe par perméation dans la feuille de fibres (105, 205, 208) contenue dans l'élément pour la couche intermédiaire,
ou dans lequel
l'élément pour la couche intermédiaire est un élément obtenu par imprégnation de la feuille de fibres (105, 205, 208) avec une résine fluorée (106, 305, 405, 505, 605), et le matériau de base (102, 202, 302, 402, 502, 602, 702) est un matériau de base ayant une surface revêtue d'une résine thermoplastique autre qu'une résine fluorée (306, 406, 506, 606), et
dans l'étape de collage par thermocompression, la résine thermoplastique autre qu'une résine fluorée (306, 406, 506, 606) déposée sous forme de revêtement sur le matériau de base (102, 202, 302, 402, 502, 602, 702) passe par perméation dans la feuille de fibres (105, 205, 208) contenue dans l'élément pour la couche intermédiaire,
ou dans lequel
le matériau de base (102, 202, 302, 402, 502, 602, 702) est un matériau de base ayant une surface revêtue d'une résine thermoplastique autre qu'une résine fluorée (306, 406, 506, 606), et
dans l'étape de collage par thermocompression, la résine fluorée (106, 305, 405, 505, 605) contenue dans l'élément pour la couche de surface et la résine thermoplastique autre qu'une résine fluorée (306, 406, 506, 606) déposée sous forme de revêtement sur le matériau de base (102, 202, 302, 402, 502, 602, 702) passent par perméation dans la feuille de fibres (105, 205, 208) contenue dans l'élément pour la couche intermédiaire,
ou dans lequel
l'élément pour la couche intermédiaire est un élément obtenu par imprégnation d'une surface de la feuille de fibres (105, 205, 208) avec une résine fluorée (106, 305, 405, 505, 605) et par imprégnation de l'autre surface de la feuille de fibres (105, 205, 208) avec une résine thermoplastique autre qu'une résine fluorée (306, 406, 506, 606), et
dans l'étape de collage par thermocompression, l'élément pour la couche de surface est collé par thermocompression sur la surface de l'élément pour la couche intermédiaire imprégné de la résine fluorée (106, 305, 405, 505, 605), et le matériau de base (102, 202, 302, 402, 502, 602, 702) est collé par thermocompression sur la surface de l'élément pour la couche intermédiaire imprégné de la résine thermoplastique autre qu'une résine fluorée (306, 406, 506, 606).
